# EUROPEAN PATENT SPECIFICATION

(11) **EP 3 336 494 B1**
(45) Date of publication and mention of the grant of the patent: **03.08.2022**
(21) Application number: 17206693.8
(22) Date of filing: 12.12.2017
(51) Int. Cl.: G01J 1/04, G02B 1/11, H04B 10/112

(54) **MOBILE SYSTEM INCORPORATING FLEXIBLE AND TUNABLE ANTI-REFLECTIVE FILM AND METHOD**
MOBILES SYSTEM MIT FLEXIBLEM UND ABSTIMMBAREM ANTIREFLEXFILM UND VERFAHREN
SYSTÈME MOBILE INCORPORANT UN FILM SOUPLE ET ANTIRÉFLÉCHISSANTE ACCORDABLE ET PROCÉDÉ

(30) Priority: 16.12.2016 US 201615382276
(43) Date of publication of application: 20.06.2018
(73) Proprietor: Sunlight Aerospace Inc., Edison, NJ 08817 (US)
(72) Inventor: BRUCE, Allan James, Scotch Plains, NJ 07076 (US); FROLOV, Sergey, Murray Hill, NJ 07974 (US); CYRUS, Michael, Castle Rock, CO 80104 (US)
(74) Representative: Knowles, James Atherton

(56) References cited:
- WO-A1-2016/028641
- US-A1- 2004 071 180

## Description

### FIELD OF INVENTION

The present invention relates to a system, or device, which incorporates a free standing, or supported, skin which is flexible and exhibits tunable, or settable, antireflective (AR) behavior to incident light when the skin is stretched, flexed or otherwise deformed.

### BACKGROUND

Untethered, unmanned mobile systems are increasingly employed for missions on land, sea and in the air. Current unmanned systems typically employ Radio Frequency (RF) communications for system management and mission operations. Unmanned systems sometimes include on-platform photovoltaic (PV) cells which convert incident solar energy to electrical energy which is then used to power platform, or payload, operations. They may also include optical systems for imaging, mapping or other sensing functions. Additionally, free space optical (FSO) communication links to and/or from the platforms have been demonstrated in a few instances. FSO directional communication links can operate with lower latency, higher bandwidth and longer range than conventional RF links and are an area of increasing interest in the unmanned system community. Any optical device such those mentioned above which makes use of optical energy that is provided to it will be referred to herein as an optical receiving device.

In regard to optimizing the performance of on-platform optical receiving devices it is desirable to optimize the characteristics (e.g. the optical intensity) of incoming light which passes through the surface of the device. A significant, and frequently detrimental, effect can be the diminution of signal intensity because of reflection losses at the interface of the device. This can be due to the refractive index mismatch between the device and its surroundings, surface structure, or other effects. Antireflective (AR) technology is frequently used to minimize such interface reflection losses. AR implementation typically involves the engineering of coating layers, and/or surface structures which can be applied to individual, or multiple, optical receiving devices.

WO-A-2016/028641 discloses the structure and functionality of a freestanding or self-supporting anti-reflection (AR) skin, which is flexible and tunable.

### SUMMARY

According to the invention, a method for enhancing one or more optical performance parameters of an optical receiving device is provided as defined in claim 1 and a mobile device is provided as defined in claim 5. Further developments of the invention are the subject of the dependent claims. In one aspect, the invention provides skins or films that are mechanically durable and which exhibit settable or tunable optical AR characteristics when subject to changes in shape or physical dimensions. Embodiments include skins with stacked sub-wavelength layers and nano-, or micro-, structures which experience dimensional changes and exhibit changeable AR characteristics when the skins are stretched, flexed or otherwise changed in shape. In their original state the skins should be at least partially, transmitting to underlying optical receiving devices.

The skins or films may be distinguished from conventional AR solutions in that they are designed to be mechanically durable and alter their AR characteristics when stretched or flexed. In this regard the materials, structure and optical design are selected, or engineered, such that any critical values of dimension, refractive index or other essential characteristics are achieved during deformation.

A variety of flexible and transparent base materials including polymers and fluoro-polymers and standard engineering and design methods may be employed to achieve the desired characteristics. The latter includes single- or multi-layer structures, doped, composite and nano-structured layers or surfaces. The achievable AR characteristics are appropriate for a wide range of devices.

In another aspect, the invention provides a mobile system that includes a self-supporting mobile platform, a tunable AR skin or film disposed on and secured to the mobile platform, one or more actuators and a controller. The tunable AR skin or film includes one or more layers that are at least partially transmitting to optical energy at one or more optical wavelengths. The skin or film is substantially flexible and/or stretchable and has an optical AR to incident electromagnetic radiation of a given wavelength which is selectively variable when flexed and/or stretched. The actuators are able to flex and/or stretch the skin or film in response to receipt of a control signal. The controller generates the control signal based on a measured value of the incident electromagnetic radiation transmitted through the tunable skin or film.

In some situations, multiple incorporated optical receiving devices may be required to operate at different wavelengths, or light intensities, and in continuous, intermittent or periodic modes. System performance during missions of unmanned mobile systems, for instance, may benefit from the active adjustment of these parameters, in response to variations in range, environmental conditions or other operational requirements. Existing AR solutions for specific optical devices are typically engineered for use in a specific environment (e.g. temperature, humidity and pressure) and may not remain optimized if these environmental conditions change, or if the optical system incorporates different optical receiving devices, requiring different wavelength, intensity or other operating characteristics. In many instances, unmanned mobile systems are likely to encounter environmental variations in use and likely to include a multiplicity of different optical devices with different operational requirements with the evolution of more complex missions. The systems and methods described herein for actively tuning the AR characteristics of a skin deployed on, or over, underlying optical receiving devices on a mobile platform can be used to address these problems by actively tuning the skin while in-use in response to environmental variations or different optical receiving device requirements.

Embodiments of the present invention, summarized above and discussed in greater detail below, can be understood by reference to the illustrative embodiments of the invention depicted in the appended drawings. It is to be noted, however, that the appended drawings illustrate only typical embodiments of this invention and are therefore not to be considered limiting of its scope, for the invention may admit to other equally effective embodiments within the scope of the appended claims.

### Brief Description of the Drawings

FIG. 1 shows one example of a tunable AR skin that extends over a mobile platform and over an underlying optical receiving device.
FIG. 2 shows a simplified schematic diagram of one example of a mobile system that includes a mobile platform on which a tunable AR skin is located.
FIG. 3 shows a simplified schematic diagram of another example of a mobile system that includes an unmanned, aerial system (UAV) airfoil on which a tunable AR skin is located.
FIG. 4 shows a top plan view of one example of an unmanned, aerial system (UAV) airfoil having an open-frame structure over which a tunable AR skin may extend.
FIGs. 5(a) and 5(b) show a schematic representation of a tunable AR multi-layer skin, with an optical interference stack.
FIGs. 6(a) and 6(b) show another schematic representation of a tunable AR skin, with a 1D grating on the surface.
FIG. 7 shows an example of a tunable AR skin having a plurality of layers.

### Detailed Description

### Introduction

As explained in more detail below, a flexible and tunable optically AR skin can be deployed on, or at, the surface of, or within, a mobile platform to enable the dynamic tuning of incoming, and/or outgoing light, or optical signals to an optical receiving device for the purpose of optimizing or enhancing its performance. The optical performance parameters being optimized or enhanced will depend on the functionality of the optical receiving device. Such functionality may include, without limitation, optical sensing, communications and/or optical imaging. Furthermore, the system in which such a skin is employed, may include means to actively monitor, analyze and adjust the AR behavior of the skin to attain a desired performance in use.

Such skins may have a variety of structures, be fabricated from a variety of materials and constructed by various means. They may be designed and implemented for a single function or have multiple functionality including multi-optical, structural, electrical, protection or other functions. Changes in the AR behavior of the skin may be achieved by changing the periodicity, aspect ratio or other characteristic of grating or interferometric layered structures in the skin. These changes may be uniformly or non-uniformly applied by flexing, stretching or physically deforming the reflective skin under an applied stimulus. Changes in environment conditions e.g. temperature may also effect changes. The range of achievable AR behavior may be in the range of 0-100%. In some embodiments the starting AR without any applied stimulus may be a high value e.g. 90% with the option of positive and/or negative adjustment.

A number of uses are illustrated below for the tunable optically AR skin, which may be provided on various mobile vehicles and other mobile systems, including, without limitation, unmanned aerial systems (UAVs), marine systems, ground systems and wearable systems. In these applications the AR behavior of the skin is actively tuned, with the goal of optimizing the performance of an underlying optical receiving device, or multiple devices, on a mobile platform. Specific means are incorporated to measure, analyze and actively adjust the AR behavior of skin during use to enable dynamic tuning for optimizing system performance in a given application.

The means of altering AR behavior may involve the use of actuators activated by thermal (heating, cooling), piezo-electric, magnetic, electro-active, pneumatic and hydraulic means, for instance, embedded in at least one layer of the skin. Such elements may be used to induce expansion or contraction effects which produce flexing, stretching or deformation of the skin and thus produce a change in reflectivity. Changes to AR behavior can also be effected by inducing deformation of the skin by changing the dimensions of a skin-supporting frame by mechanical or other means. Changes in AR behavior can also be effected by inducing pressure changes under a skin which is sealed to a supporting frame which also provides an underlying cavity in which the pressure can be adjusted below or above the external ambient pressure.

To access the intended benefits of the skin it is important to be able to actively monitor, analyze and subsequently adjust the AR behavior of the skin when it is incorporated into a mobile system or device.

The monitoring of AR behavior may be performed on the same platform as the device. AR monitoring may be achieved indirectly by monitoring the performance of (an) optical receiving device(s) or additional optical receiving detector(s) underlying the skin, to uncalibrated incoming light, or signals. More quantitative monitoring may be achieved by using a calibrated source of incoming light, (e.g. a local light source on the same platform), a skin with defined transmittance characteristics, and a calibrated optical receiver device underlying the skin. In this way the actual value of the transmittance and/or reflectance of the skin can be calculated at any given time.

Optical receiving devices for monitoring, referred to herein as optical monitoring devices, will typically provide an electrical output to ancillary readout or analysis systems. The output of these systems can then be fed directly, or remotely e.g. via an RF wireless link, to a control system on the platform which controls the AR behavior adjusting mechanism of the skin. Such a feedback loop provides the basis for tuning and optimizing the AR performance of the skin. Standard methodologies such as dithering can also be applied for performance optimization.

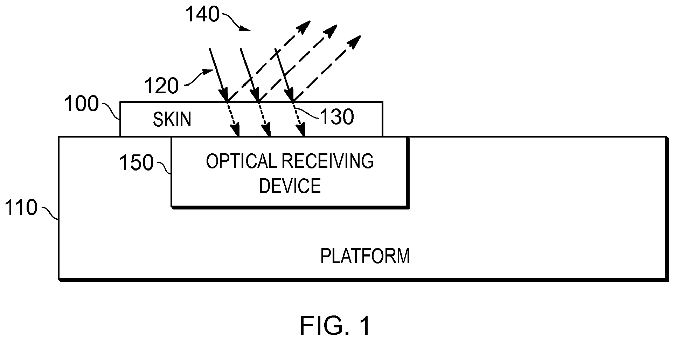

FIG. 1 shows an example of a tunable AR skin 100 that extends over a mobile platform 110. The skin 100 may extend over the entirety of the platform or, as shown, just a portion thereof. For instance, if the mobile platform 110 is an aircraft, the skin 100 may extend over the aircraft wings and/or the fuselage. In some embodiments the mobile platform 110 may be incorporated in a mobile vehicle such as an automobile, aircraft or ship. The surface of the platform 110 on which the skin 100 extends may be planar or non-planar. Moreover, in some embodiments the mobile platform 110 may be an open frame, with the skin 100 only secured to the frame at its edges. That is, in this embodiment there may not be any supporting structure above or below the skin 100.

Incident light 120 on the skin 100 is at a minimum partially, transmitted through the skin as transmitted light 130, and partly reflected 160. The transmitted light 130 is received by an optical receiving device 150, which underlies the skin. The intensity of transmitted light 130 which is incident on the surface of the optical receiving device is determined by the AR behavior of the skin and by the transmittance through the skin 100.

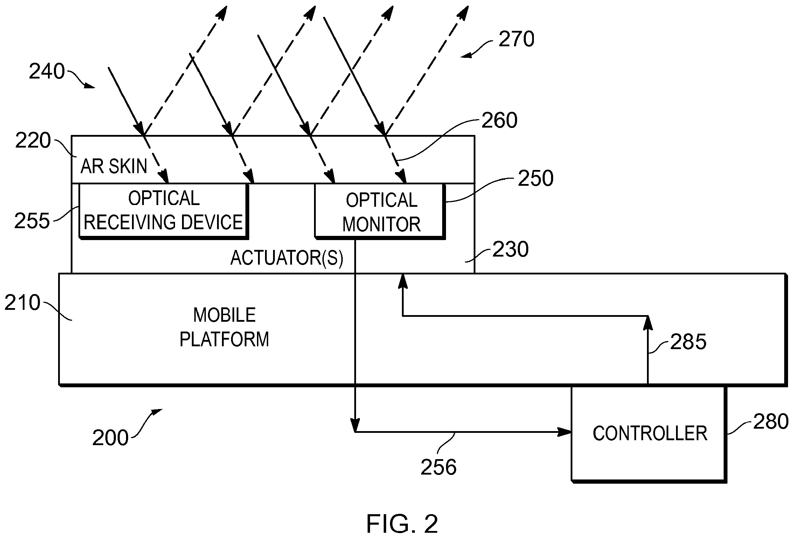

FIG. 2 shows a simplified schematic diagram of one example of a mobile system 200 that includes a mobile platform 210 on which a tunable AR skin 220 is located. One or more actuators 230 or other activated elements are located below the tunable AR skin 220 for flexing and/or stretching the skin 220. Incident light 240 on the skin is partially transmitted through the skin as transmitted light 260 and partially reflected by the skin as reflected light 270. An optical receiving device 255 is also underlying the skin for receiving light 260 transmitted through the skin 220. The performance of the optical receiving device 255 is optimized or enhanced by the flexing and/or stretching of the skin 220. A signal 256 from an optical monitor 250 that also underlies the skin is indicative of the intensity of light received after transmission through the skin 220. The signal 256 is sent to a controller 280. The controller 280 may be located on the mobile platform 210 or elsewhere in the mobile system 200. In response, the controller 280 generates a control signal 285 that is provided to the actuators 230 to thereby cause the flexing and/ or stretching of the skin 220 and the consequent change in the AR behavior of the skin 220, in order to optimize the characteristics of the transmitted light reaching the optical receiving device 255. It should be noted that in some embodiments the functionality of the optical monitor 250 may be incorporated into the optical receiving device 255.

Instead of or in addition to monitoring the optical energy transmitted through the AR skin, in some embodiments it may be desirable to measure one or more optical performance parameters of the optical receiving device and then adjust the AR characteristics of the AR skin in order to optimize or enhance those performance parameters. The particular performance parameter(s) being optimized or enhanced will depend on the particular type of optical receiving device that is employed. Illustrative examples of such performance parameters will be discussed in the use cases presented below.

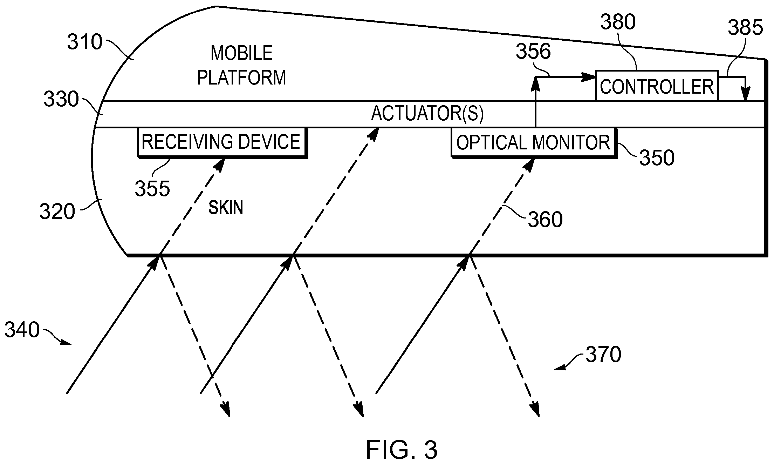

FIG. 3 shows a simplified schematic diagram of another example of a mobile system 300, which in this example is a UAV. A tunable AR skin 320 is located on an underside of a UAV airfoil 310, which is shown in cross-section. One or more actuators 330 or other activated elements are located between the skin 320 and the airfoil 310 for flexing and/or stretching the skin 320. In this case incoming light 340 from below is incident on the AR skin 320. The incident light 340 is partly transmitted through the skin as transmitted light 360 and partially reflected by the surface of the skin as reflected light 370. The transmitted light 360 is incident on both an underlying optical receiving device 355 and optical monitor 350. An output signal from the optical monitor 350 is routed to an analyzer/controller 380. In response, the controller 380 generates a control signal 385 that is provided to the actuators 330 to thereby cause the flexing and/ or stretching of the skin 320 and the consequent change in the AR behavior of the skin 320, in order to optimize the characteristics of the transmitted light reaching the optical receiving device 355. In other embodiments the control signals 385 may be transmitted using RF or optical communication links.

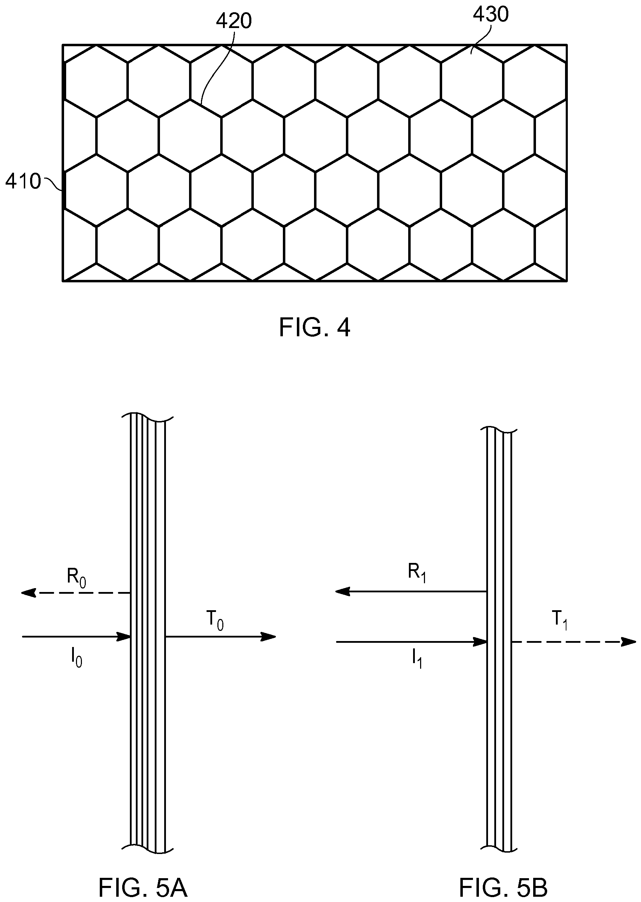

FIG. 4 shows a top plan view of the UAV airfoil 410, which in this example has an open frame with a honeycomb internal structure defined by struts 420. Each region 430 between the struts 420 can serve as individual regions in which the skin can be locally deformed independently of the other regions to produce selective tuning of the reflective properties of the skin.

Illustrative examples of tunable AR skins that may be employed in the mobile systems discussed above will now be presented.

### Tunable AR Skins

The discrete AR skins may have physical structures which are resilient to significant mechanical or functional degradation or failure when stretched and, or flexed in the course of deployment or use. They may be comprised of ductile materials, if a single deployment is sufficient, or elastic materials if repeated or continuous bi-directional modification is required during use. In cases where the skin is comprised of multiple-layers the physical properties of the constituent layers should be sufficiently similar to maintain the integrity of the skin under conditions of use without mechanical, or functional, degradation. Examples of suitable skin materials include standard polymeric materials which meet the requirements of the application.

The preferred skins may comprise appropriate materials or surfaces to be able to function as discrete elements, such as structural skins, or to interface with supporting structures or surrounding media, as well as interfacing with the underlying optical receiving devices. Such interfacing may be achieved in a number of conventional ways by chemical, thermal, mechanical, electrical or other means and may include optional surface layers or materials to assist the interfacing process. Examples of such surface layers include layers comprised of standard adhesives.

The AR skins may have any of a number of transverse structures which enable the desired AR behavior. They may be comprised of mono-layers, which have constant, graded or varied refractive index. They may be comprised of a multi-layer where the layers have an engineered progression of refractive index. They may include nano-composite layers or nano-structured surfaces which may provide a wider range of engineered refractive index profiles than dense or single material layers. The skins may incorporate an interference stack of materials which change AR behavior when subject to flexing and stretching. The skins may also include grating structures, including sub-wavelength gratings, which exhibit varying AR behavior when stretched or flexed.

FIGs. 5(a) and 5(b) show a schematic representation of a multi-layer skin, with an optical interference stack. In the initial state, shown in FIG 5(a), the film exhibits significant AR behavior and incident light (I₀) is partially transmitted (To) through the skin and partially reflected (R₀). When stretched, as shown in FIG. 5(b) the dimension of the interference stack is reduced, potentially also changing the refractive index of the materials, and the structure can become more, reflective to incident light (I₁) and in the extreme case is substantially reflected (R₁) with little or no transmission (T₁). Conversely, the structure may be designed to be more reflective in its initial state and less reflective when stretched. The structure can also be designed to produce intermediate levels of transmission and reflection for a defined range of deformation.

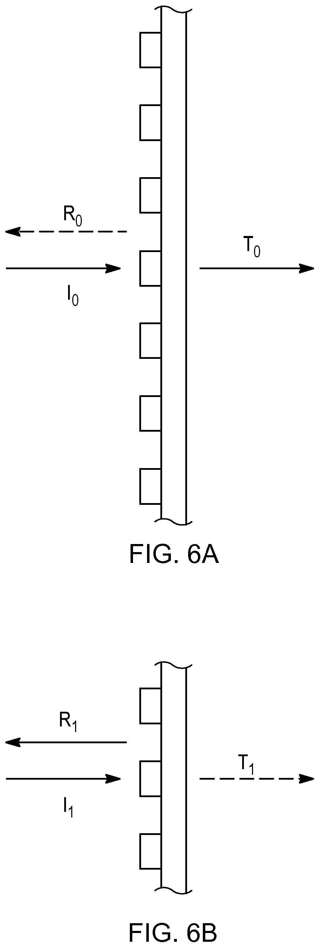

FIGs. 6(a) and 6(b) shows an analogous representation of a skin, with a 1D grating on the surface. As shown in an un-stretched condition of FIG. 6(a) the skin may be designed to have significant AR behavior. When, the skin is stretched in FIG. 6(b) the dimension and periodicity of the grating changes and may exhibit lower AR behavior. The skin may also be designed for the reverse behavior and intermediate performance. When the skin is flexed it can be simultaneously stretched or compressed in various regions which can produce more complex, but predictable, AR behavior.

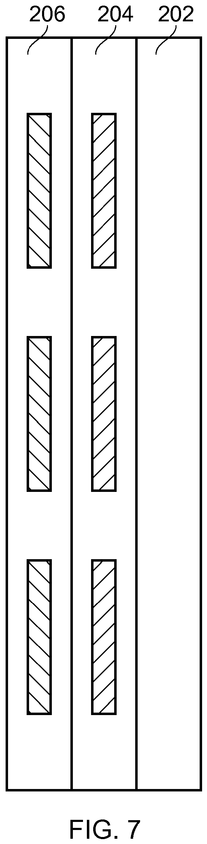

FIG. 7 shows a skin having a plurality of layers 202, 204 and 206, layers 204 and 206 include structured gratings. As further shown, layer 204 is sub-surface layer.

Materials with suitable mechanical and optical properties include various polymers which are appropriately, elastic, or ductile and optically transmissive. Depending on the optical structure employed they should also be suitable for chemical, or structural, modifiable to provide index variations, for patterning, or loading with a high index particles, including nano-particles. Examples include polymers which are polyethelene or polypropylene or fluoro-polymers such as ETFE and PVDF and structural or compositional modifications thereof, including composites, loaded with other materials or phases. Within a range the ETFE and modified derivatives can exhibit elastic behavior. The flexible skin should be sufficiently transmitting under the conditions of use for the desired electromagnetic frequencies which may be in the ultra-violet, visible or infra-red regions of the spectrum. Embodiments with specular or diffuse reflective performance may be preferred.

In some embodiments, the thickness, and AR behavior of the respective layers or structures in the flexible skin should be in a range that changes in these parameters induced by stretching or flexing during deployment, or use, are sufficient to significantly alter the AR behavior of the skin from its performance prior to deformation.

In another embodiment, a multi-layer skin, with an optical interference stack as shown in Figure 1 is provided. Such a skin may consist of alternating layers of ETFE, with different levels of high-index, nano-particle material loading to establish a desired index contrast. In the unperturbed state this skin may be substantially transparent. When stretched the periodicity of the interference stack will change and result in a change in the AR behavior of the skin. The structure may initially be partially reflective and exhibit a change in AR behavior when stretched. The changes could be gradual or stepped in nature. If the skin is flexed, one surface may be stretched and the opposite surface compressed, producing more complex, but predictable, reflection characteristics. Asymmetric stretching could also be used to introduce, or change, the response to light of different polarizations.

In yet another embodiment, a skin with a reflective grating on the surface as shown in Figure 2 is provided. The grating could be 1D, 2D or 3D in nature. Such a skin may consist of a nano-structured layer, or layers of ETFE. In an unperturbed state the skin could be transmitting. When stretched the dimension and periodicity of the grating will increase and could become more reflective. The skin may also be designed for the reverse behavior. These changes could be gradual or stepped in their response. When the skin is flexed it can be simultaneously stretched or compressed in various regions which can produce more complex, but predictable, AR characteristics. Asymmetric stretching could also be used to introduce, or change, the response to light of different polarizations.

### Illustrative Applications

Various use cases will be briefly presented below describing various applications in which mobile systems having a tunable optically AR skin may be employed.
1. A mobile system may include a tunable AR skin for optimizing the performance of an underlying optical receiving device, including optical imaging, sensing or communications devices. The skin may be tuned, or set, to adjust the intensity, wavelength or intermittency of the transmitted light which enters the optical receiving device. For example the tuning point may be selected to optimize or enhance performance parameters such as the signal intensity and/or receiver sensitivity or to avoid saturation of the optical detector device.
2. A mobile system may include a tunable AR skin for on-board transmitter applications. In this embodiment the skin may be tuned to adjust the wavelength, intensity or intermittency of outgoing light or optical signals from an underlying optical source, such as an LED. This can be used to adjust performance parameters such as the transmitted wavelength and/or the intensity or range of an outgoing signal. For instance, in some cases it may be desirable to restrict the intensity and/or range of the outgoing signal for specific applications or safety requirements.
3. A mobile system may include a tunable AR skin for an underlying photovoltaic (PV) module. In this embodiment the skin may be tuned to adjust the intensity of incoming light of a given wavelength on an underlying photovoltaic cell or module. This adjustment may be used to optimize or enhance performance parameters that impact power system management to maximize, or limit, solar energy harvesting for better matching to the available storage capacity and/or usage.
4. A mobile system may include a tunable AR skin for "optical cloaking" or dynamic camouflage applications. In this embodiment the skin may be variably tuned over a sizeable area to adjust the contrast with its environment for the purpose of camouflage.
5. A mobile system may include a large area, tunable AR skin for underlying receiver or transmitter arrays. In this embodiment, the skin is used for arrays of underlying receivers or transmitters. The tuning may include uniform or different tuning for different sectors of the arrays.
6. A mobile system may include a large area, tunable AR skin for multiple, dissimilar underlying devices. In this embodiment the skin may be locally tuned to meet the performance requirements of the underlying optical receiving devices.

The processes performed by the analyzers/controllers described above may be implemented as a computer-readable storage medium embedded with a computer executable program, which encompasses a computer program accessible from any computer-readable storage device or storage media. For example, computer readable storage media can include but are not limited to magnetic storage devices (e.g., hard disk, floppy disk, magnetic strips), optical disks (e.g., compact disk (CD), digital versatile disk (DVD)), smart cards, and flash memory devices (e.g., card, stick, key drive). However, computer readable storage media do not include transitory forms of storage such as propagating signals, for example.

The processes performed by the analyzers/controllers may also reflect the emergence and evolution of the internet of things (IOT), machine-to-machine (M2M) communications, artificial intelligence (AI) and machine learning.

In terms of IOT and M2M communications, the control communications may come via, or from, other platforms or machines, the control signals may also be distributed or duplicated to different mobile platforms to enable a collective response. For example control signals may be distributed to a plurality (e.g., a swarm) of UAVs or other mobile platforms. The possibility of coordinated AR behavior from the skins may add a level of capability in various applications for imaging, sensing, communications or other functionality.

In terms of AI and machine learning, the control system for individual or collective platform control may be either co-located on the mobile platform or remotely located and may have the ability to aggregate and/or adapt pre-programed algorithms, or responses, as "learned behavior" in regard to the reflectivity control and tuning. Such learning may be based on the combination and analysis of multiple sensory inputs, for example environmental, proximity, solar irradiance, geolocation or other inputs, in combination with the base reflectivity analysis. In this way a mobile platform, or a plurality of mobile platforms, can be actively tuned or optimized to provide a higher level performance than may be achieved using only the measured or calculated AR behavior. Indeed, complex learned behaviors may be initiated in response to "circumstance recognition" based on a data base of previously established effects of actuated control, and/or their holistic effect for performance and operations. One example of such control would be the selection of an appropriate learned response to minimize interference or conflicts in communications, sensing, image recognition or other system functionality, between autonomous platforms, structures, terrains or environmental conditions.

In the foregoing description, example aspects of the invention are described with reference to specific example embodiments thereof. The specification and drawings are accordingly to be regarded in an illustrative rather than in a restrictive sense. It will, however, be evident that various modifications and changes may be made thereto, in a computer program product or software, hardware, or any combination thereof, without departing from the broader spirit and scope of the present invention.

In addition, it should be understood that the figures, which highlight the functionality and advantages of the present invention, are presented for illustrative purposes only. The architecture of the example aspect of the present invention is sufficiently flexible and configurable, such that it may be utilized (and navigated) in ways other than that shown in the accompanying figures.

Although example aspects herein have been described in certain specific example embodiments, many additional modifications and variations would be apparent to those skilled in the art. It is therefore to be understood that the various example embodiments herein may be practiced otherwise 2. within the scope of the appended claims than as specifically described. Thus, the present example embodiments, again, should be considered in all respects as illustrative and not restrictive.

## Claims

1. A method for enhancing one or more optical performance parameters of an optical receiving device (150), comprising:
measuring a value of the transmittance of electromagnetic radiation of a given optical wavelength (130) that is transmitted to an optical receiving device (150) through at least one anti-reflective, AR, layer (100), the AR layer (100) being at least partially transmissive to optical energy at one or more optical wavelengths, the at least one AR layer (100) being substantially flexible and/or stretchable and having AR characteristics to incident electromagnetic radiation of a given wavelength which is selectively variable when flexed and/or stretched; and
based on the measured value of the transmittance of the electromagnetic radiation transmitted through the at least one AR layer (100), causing the AR layer (100) to be flexed and/or stretched to thereby tune one or more AR characteristics of the AR layer (100) to enhance one or more optical performance parameters of the optical receiving device (150), wherein the optical receiving device (150) is located on a mobile platform (110) and the AR layer (100) is a film or skin covering at least a portion of a surface of the mobile platform (110).

2. The method of claim 1, wherein the optical receiving device (150) is an optical communication receiver and further comprising tuning the one or more AR characteristics of the AR layer (100) to enhance performance of the optical communication receiver.

3. The method of either claim 1 or claim 2, further comprising measuring the value of the electromagnetic radiation transmitted through (130) the at least one AR layer (100) using the optical receiving device (150).

4. The method of any one of the preceding claims, further comprising causing different portions of the film or skin (100) to be flexed and/or stretched by different amounts to thereby impart different AR characteristics to the different portions of the film or skin (100).

5. A mobile system (200), comprising:
a self-supporting mobile platform (210);
at least one anti-reflective, AR, layer (220) disposed on and secured to the mobile platform (210), the at least one AR layer (220) being at least partially transmissive to optical energy (240) at one or more optical wavelengths, the at least one AR layer (220) being substantially flexible and/or stretchable and having AR characteristics to incident electromagnetic radiation of a given wavelength which is selectively variable when flexed and/or stretched;
a controller (280) for generating a control signal (285) based on a measured value of the transmittance of the at least one AR layer (220);
an optical monitor (250) located on the mobile platform (210) for monitoring the transmittance of the at least one AR layer (220) and providing the measured value of the transmittance to the controller (280); and
one or more actuators (230) for flexing and/or stretching the at least one AR layer (220) in response to receipt of the control signal (285).

6. The mobile system of claim 5, further comprising at least one optical receiving device (255) located to receive the incident electromagnetic radiation that is transmitted (260) through the at least one AR layer (220).

7. The mobile system of claim 6, wherein the at least one optical receiving device (255) is located between the at least one AR layer (220) and the one or more actuators (230).

8. The mobile system of any one of the preceding claims 5 to 7, wherein the one or more actuators (230) are configured to cause the AR characteristics of the at least one AR layer (220) to be dynamically tuned by flexing and/or stretching the at least one AR layer (220) in response to the control signal (285) being dynamically adjusted based on sequential measurements of the measured value of the transmittance of the at least one AR layer (220).

9. The mobile system of any one of the preceding claims 5 to 8, wherein the self-supporting mobile platform (210) is selected from the group consisting of an Unmanned Aerial Vehicle (UAV), an Unmanned Marine Vehicle (UMV), an Unmanned Ground Vehicle (UGV) or a wearable platform.

10. The mobile system of any one of the preceding claims 5 to 9, wherein the one or more actuators (230) includes a plurality of actuators (230) for flexing and/or stretching different portions of the at least one AR layer (220) independently of one another, the controller (280) being configured to provide different control signals to the different actuators (230).

11. The mobile system of any one of the preceding claims 5 to 10, further comprising one or more optical monitors remotely located from the mobile platform (210) for monitoring the transmittance of the at least one AR layer (220) and providing measured value(s) of the transmittance to the controller (280).

12. The method of any one of the preceding claims 1 to 4, further comprising calculating a value of transmittance or reflectance of the AR layer (100, 220) using a calibrated light source.

13. The method of any one of the preceding claims 1 to 5 or 12, measuring one or more optical performance parameters of an optical receiving device (150, 255) that receives an optical signal that is transmitted (130, 260) to the optical receiving device (150, 255) through the at least one anti-reflective, AR, layer (100, 220), and
based on measured values of the one or more optical performance parameters, causing the AR layer (100, 220) to be flexed and/or stretched to thereby tune one or more AR characteristics of the AR layer (100, 220) to enhance the one or more optical performance parameters of the optical receiving device (150, 255).

## Patentansprüche

1. Verfahren zum Verbessern eines oder mehrerer optischer Leistungsparameter einer
optischen Empfangsvorrichtung (150), umfassend:
Messen eines Werts der Durchlässigkeit elektrischer Strahlung einer vorgegebenen optischen Wellenlänge (130), die an eine optische Empfangsvorrichtung (150) durch zumindest eine antireflektierende, AR, Schicht (100) übertragen wird, wobei die AR-Schicht (100) zumindest teilweise für optische Energie bei einer oder mehreren optischen Wellenlängen durchlässig ist, wobei die zumindest eine AR-Schicht (100) im Wesentlichen biegsam und/oder dehnbar ist und AR-Eigenschaften für einfallende elektromagnetische Strahlung einer vorgegebenen Wellenlänge aufweist, die selektiv variabel sind, wenn sie gebogen und/oder gedehnt wird; und
basierend auf dem gemessenen Wert der Durchlässigkeit der elektromagnetischen Strahlung, die durch die zumindest eine AR-Schicht (100) übertragen wird, Veranlassen der AR-Schicht (100) gebogen und/oder gedehnt zu werden, um dadurch eine oder mehrere AR-Eigenschaften der AR-Schicht (100) abzustimmen, um einen oder mehrere optische Leistungsparameter der optischen Empfangsvorrichtung (150) zu verbessern,
wobei die optische Empfangsvorrichtung (150) auf einer mobilen Plattform (110) liegt und die AR-Schicht (100) ein Film oder eine Haut ist, der/die zumindest einen Abschnitt einer Oberfläche der mobilen Plattform (110) abdeckt.

2. Verfahren nach Anspruch 1, wobei die optische Empfangsvorrichtung (150) ein optischer Kommunikationsempfänger ist und weiter umfassend Abstimmen der einen oder mehreren AR-Eigenschaften der AR-Schicht (100), um Leistung des optischen Kommunikationsempfängers zu verbessern.

3. Verfahren nach entweder Anspruch 1 oder Anspruch 2, weiter umfassend Messen des Werts der elektromagnetischen Strahlung, die durch die zumindest eine AR-Schicht (100) unter Verwendung der optischen Empfangsvorrichtung (150) übertragen (130) wird.

4. Verfahren nach einem der vorstehenden Ansprüche, weiter umfassend Veranlassen unterschiedlicher Abschnitte des Films oder der Haut (100) in unterschiedlichem Ausmaß gebogen und/oder gedehnt zu werden, um dadurch den unterschiedlichen Abschnitten des Films oder der Haut (100) unterschiedliche AR-Eigenschaften zu verleihen.

5. Mobiles System (200), umfassend:
eine selbsttragende mobile Plattform (210);
zumindest eine antireflektierende, AR, Schicht (220), die auf der mobilen Plattform (210) angeordnet und daran gesichert ist, wobei die zumindest eine AR-Schicht (220) zumindest teilweise für optische Energie (240) bei einer oder mehreren optischen Wellenlängen durchlässig ist, wobei die zumindest eine AR-Schicht (220) im Wesentlichen biegsam und/oder dehnbar ist und AR-Eigenschaften für einfallende elektromagnetische Strahlung einer vorgegebenen Wellenlänge aufweist, die selektiv variabel sind, wenn sie gebogen und/oder gedehnt wird;
eine Steuereinheit (280) zum Erzeugen eines Steuersignals (285) auf Basis eines gemessenen Werts der Durchlässigkeit der zumindest einen AR-Schicht (220);
einen optischen Monitor (250), der auf der mobilen Plattform (210) liegt, zum Überwachen der Durchlässigkeit der zumindest einen AR-Schicht (220) und Bereitstellen des gemessenen Werts der Durchlässigkeit an die Steuereinheit (280); und
einen oder mehrere Aktoren (230) zum Biegen und/oder Dehnen der zumindest einen AR-Schicht (220) in Reaktion auf Empfang des Steuersignals (285).

6. Mobiles System nach Anspruch 5, weiter umfassend zumindest eine optische Empfangsvorrichtung (255), die so liegt, dass sie die einfallende elektromagnetische Strahlung empfängt, die durch die zumindest eine AR-Schicht (220) übertragen (260) wird.

7. Mobiles System nach Anspruch 6, wobei die zumindest eine optische Empfangsvorrichtung (255) zwischen der zumindest einen AR-Schicht (220) und dem einen oder den mehreren Aktoren (230) liegt.

8. Mobiles System nach einem der vorstehenden Ansprüche 5 bis 7, wobei der eine oder die mehreren Aktoren (230) dazu ausgelegt sind, die AR-Eigenschaften der zumindest einen AR-Schicht (220) zu veranlassen, dynamisch abgestimmt zu werden, indem die zumindest eine AR-Schicht (220) gebogen und/oder gedehnt wird in Reaktion darauf, dass das Steuersignal (285) basierend auf aufeinanderfolgenden Messungen des gemessenen Werts der Durchlässigkeit der zumindest einen AR-Schicht (220) dynamisch angepasst wird.

9. Mobiles System nach einem der vorstehenden Ansprüche 5 bis 8, wobei die selbsttragende mobile Plattform (210) aus der Gruppe ausgewählt wird, die aus einem unbemannten Luftfahrzeug (UAV), einem unbemannten Seefahrzeug (UMV), einem unbemannten Bodenfahrzeug (UGV) oder einer tragbaren Plattform besteht.

10. Mobiles System nach einem der vorstehenden Ansprüche 5 bis 9, wobei der eine oder die mehreren Aktoren (230) eine Vielzahl von Aktoren (230) zum Biegen und/oder Dehnen unterschiedlicher Abschnitte der zumindest einen AR-Schicht (220) unabhängig voneinander beinhaltet, wobei die Steuereinheit (280) dazu ausgelegt ist, unterschiedlicher Steuersignale an die unterschiedlichen Aktoren (230) bereitzustellen.

11. Mobiles System nach einem der vorstehenden Ansprüche 5 bis 10, weiter umfassend einen oder mehrere optische Monitore, die fern von der mobilen Plattform (210) liegen, um die Durchlässigkeit der zumindest einen AR-Schicht (220) zu überwachen und gemessene Wert(e) der Durchlässigkeit an die Steuereinheit (280) bereitzustellen.

12. Verfahren nach einem der vorstehenden Ansprüche 1 bis 4, weiter umfassend Berechnen eines Durchlässigkeits- oder Reflexionswert der AR-Schicht (100, 220) unter Verwendung einer kalibrierten Lichtquelle.

13. Verfahren nach einem der vorstehenden Ansprüche 1 bis 5 oder 12,
Messen eines oder mehrerer optischer Leistungsparameter einer optischen Empfangsvorrichtung (150, 255), die ein optisches Signal empfängt, das durch die zumindest eine antireflektierende, AR, Schicht (100, 220) an die optische Empfangsvorrichtung (150, 255) übertragen (130, 260) wird, und
basierend auf gemessenen Werten des einen oder der mehreren optischen Leistungsparameter, Veranlassen der AR-Schicht (100, 220) gebogen und/oder gedehnt zu werden, um dadurch eine oder mehrere AR-Eigenschaften der AR-Schicht (100, 220) abzustimmen, um den einen oder die mehreren optischen Leistungsparameter der optischen Empfangsvorrichtung (150, 255) zu verbessern.

## Revendications

1. Procédé d'amélioration d'un ou de plusieurs paramètres de performance optique d'un
dispositif de réception optique (150), comprenant :
la mesure d'une valeur de la transmittance d'un rayonnement électromagnétique d'une longueur d'onde optique (130) donnée qui est émis vers un dispositif de réception optique (150) à travers au moins une couche antiréfléchissante (AR) (100), la couche AR (100) transmettant au moins partiellement une énergie optique à une ou plusieurs longueurs d'onde optiques, la au moins une couche AR (100) étant sensiblement flexible et/ou étirable et présentant des caractéristiques AR vis-à-vis d'un rayonnement électromagnétique incident d'une longueur d'onde donnée qui sont sélectivement variables lorsqu'elle est pliée et/ou étirée ; et
sur la base de la valeur mesurée de la transmittance du rayonnement électromagnétique transmis à travers la au moins une couche AR (100), le fait de provoquer la flexion et/ou l'étirement de la couche AR (100) pour ainsi ajuster une ou plusieurs caractéristiques AR de la couche AR (100) afin d'améliorer un ou plusieurs paramètres de performance optique du dispositif de réception optique (150),
dans lequel le dispositif de réception optique (150) est situé sur une plate-forme mobile (110) et la couche AR (100) est un film ou une peau recouvrant au moins une partie d'une surface de la plate-forme mobile (110).

2. Procédé selon la revendication 1, dans lequel le dispositif de réception optique (150) est un récepteur de communication optique et comprenant en outre l'ajustement des une ou plusieurs caractéristiques AR de la couche AR (100) pour améliorer les performances du récepteur de communication optique.

3. Procédé selon la revendication 1 ou la revendication 2, comprenant en outre la mesure de la valeur du rayonnement électromagnétique transmis à travers (130) la au moins une couche AR (100) en utilisant le dispositif de réception optique (150).

4. Procédé selon l'une quelconque des revendications précédentes, comprenant en outre le fait de provoquer la flexion et/ou l'étirement de différentes parties du film ou de la peau (100) de différentes quantités pour ainsi conférer différentes caractéristiques AR aux différentes parties du film ou de la peau (100).

5. Système mobile (200), comprenant :
une plate-forme mobile autoportante (210) ;
au moins une couche antiréfléchissante (AR) (220) disposée sur et fixée à la plate-forme mobile (210), la au moins une couche AR (220) transmettant au moins partiellement une énergie optique (240) à une ou plusieurs longueurs d'onde optiques, la au moins une couche AR (220) étant sensiblement flexible et/ou étirable et présentant des caractéristiques AR vis-à-vis d'un rayonnement électromagnétique incident d'une longueur d'onde donnée qui sont sélectivement variables lorsqu'elle est pliée et/ou étirée ;
un dispositif de commande (280) pour générer un signal de commande (285) sur la base d'une valeur mesurée de la transmittance de la au moins une couche AR (220) ;
un moniteur optique (250) situé sur la plate-forme mobile (210) pour surveiller la transmittance de la au moins une couche AR (220) et fournir la valeur mesurée de la transmittance au dispositif de commande (280) ; et
un ou plusieurs actionneurs (230) pour plier et/ou étirer la au moins une couche AR (220) en réponse à la réception du signal de commande (285).

6. Système mobile selon la revendication 5, comprenant en outre au moins un dispositif de réception optique (255) situé pour recevoir le rayonnement électromagnétique incident qui est transmis (260) à travers la au moins une couche AR (220).

7. Système mobile selon la revendication 6, dans lequel le au moins un dispositif de réception optique (255) est situé entre la au moins une couche AR (220) et les un ou plusieurs actionneurs (230).

8. Système mobile selon l'une quelconque des revendications 5 à 7 précédentes, dans lequel les un ou plusieurs actionneurs (230) sont configurés pour amener les caractéristiques AR de la au moins une couche AR (220) à être ajustées de manière dynamique en pliant et/ou en étirant la au moins une couche AR (220) en réponse au signal de commande (285) qui est ajusté de manière dynamique sur la base de mesures séquentielles de la valeur mesurée de la transmittance de la au moins une couche AR (220).

9. Système mobile selon l'une quelconque des revendications 5 à 8 précédentes, dans lequel la plate-forme mobile autoportante (210) est sélectionnée dans le groupe consistant en un véhicule aérien sans pilote (UAV), un véhicule marin sans pilote (UMV), un véhicule terrestre sans pilote (UGV) ou une plate-forme portable.

10. Système mobile selon l'une quelconque des revendications 5 à 9 précédentes, dans lequel les un ou plusieurs actionneurs (230) incluent une pluralité d'actionneurs (230) pour plier et/ou étirer différentes parties de la au moins une couche AR (220) indépendamment les unes des autres, le dispositif de commande (280) étant configuré pour fournir différents signaux de commande aux différents actionneurs (230).

11. Système mobile selon l'une quelconque des revendications 5 à 10 précédentes, comprenant en outre un ou plusieurs moniteurs optiques situés à distance de la plate-forme mobile (210) pour surveiller la transmittance de la au moins une couche AR (220) et fournir une ou des valeurs mesurées de la transmittance au dispositif de commande (280).

12. Procédé selon l'une quelconque des revendications 1 à 4 précédentes, comprenant en outre le calcul d'une valeur de transmittance ou de réflectance de la couche AR (100, 220) en utilisant une source de lumière étalonnée.

13. Procédé selon l'une quelconque des revendications 1 à 5 ou 12 précédentes,
la mesure d'un ou de plusieurs paramètres de performance optique d'un dispositif de réception optique (150, 255) qui reçoit un signal optique qui est transmis (130, 260) au dispositif de réception optique (150, 255) à travers la au moins une couche antiréfléchissante (AR) (100, 200), et
sur la base de valeurs mesurées d'un ou de plusieurs paramètres de performance optique, le fait de provoquer la flexion et/ou l'étirement de la couche AR (100, 200) pour ainsi ajuster une ou plusieurs caractéristiques AR de la couche AR (100, 200) afin d'améliorer les un ou plusieurs paramètres de performance optique du dispositif de réception optique (150, 255).
